# EUROPEAN PATENT SPECIFICATION

(11) **EP 2 604 550 B1**
(45) Date of publication and mention of the grant of the patent: **01.10.2014**
(21) Application number: 10855839.6
(22) Date of filing: 12.08.2010
(51) Int. Cl.: B65G 1/137, B65G 1/04, B66F 9/07, A47B 96/02, B65G 1/08

(54) **AUTOMATIC PLANT FOR STORING AND DISPENSING GOODS**
AUTOMATISCHE ANLAGE ZUR AUFBEWAHRUNG UND AUSGABE VON WAREN
INSTALLATION AUTOMATIQUE POUR STOCKER ET DISTRIBUER DES PRODUITS

(43) Date of publication of application: 19.06.2013
(73) Proprietor: Automatismos Y Montajes Industriales J. Martin, S.L., 47012 Valladolid (ES)
(72) Inventor: MARTÍN DE PABLO, Francisco Javier, E-47012 Valladolid (ES); GONZÁLEZ LÓPEZ, Isabel, E-47012 Valladolid (ES)
(74) Representative: Ungria López, Javier
(86) International application number: PCT/ES2010/070549
(87) International publication number: WO 2012/020149

(56) References cited:
- EP-A1- 2 113 473
- CH-A5- 680 434
- DE-A1- 4 336 885
- DE-A1- 4 339 055
- DE-A1- 19 635 396
- DE-A1- 19 724 378
- DE-U1- 20 021 440
- US-A- 3 782 565
- US-A1- 2010 168 910

## Description

### OBJECT OF THE INVENTION

The present invention, as expressed in the wording of this specification, relates to an automatic plant for storing and dispensing goods, essentially applicable to the pharmaceutical sector, although it is also applicable to any other sector needing to store and dispense different small-sized goods.

The products are stored in principle in modular shelves, which may be inclined or not, shelves that are part of characteristic modular shelving units that also configure an elongated shelving structure in the longitudinal direction.

Based on this premise, the essence of the invention is based on characteristic modular horizontal guides along which respective modular subsets (robots) move, for the loading and unloading of products with respect to the shelves of the modular shelving units, modular horizontal guides that can easily adapt to the required length of the elongated structure of shelving units, so that both loading and unloading subsets have a horizontal translation movement parallel to said elongate structure of shelving units and a vertical movement to access the different levels of the shelves where the products are stored.

Therefore, the invention intends to use the movement generated in linear motors of permanent magnets as translation technology, a consequence is indeed obtaining very good times both in terms of accelerations (1 G, 2G, 3G...) and in final velocities (5 m/sec), while the extraction times depend on the length of the system.

To achieve the foregoing, the development of a new translation drive system of the loading and unloading subsets (robots) that allow achieving higher velocities as well as a higher modularity is proposed.

### BACKGROUND OF THE INVENTION

Despite the fact that automatic storage systems for pharmaceutical products at the pharmacy itself and others have a relatively brief history (mid 90s), they are based in a technology used in other maintenance systems adapted to the problems of pharmacies.

This type of solutions provides the pharmaceutical sector with the advantages of the automation of their warehouses, among which we have:
- Reduction of damages to the product.
- Increase in the density of storage.
- Storage flexibility.
- Reduction in order preparation time.

The main inconvenience of automatic storage in pharmacies is its high cost, both in terms of acquisition and maintenance, being as well very rigid systems that offer no flexibility to the final customer.

The technology used is based in the transmission of movement both in terms of a horizontal direction and in the elevation and descent in a vertical direction by means of notched and plain belts, as well as by other means, such as a worm drive mechanism. The real problem caused by these transmission means comes from the maintenance and wearing out of the pieces, as well as their difficult replacement.

This kind of transmission implies very reduced flexibility concerning the final dimensions of the warehouse. Even though height is not important, as most pharmacies are located at business premises with fixed heights, the variation in the length of the warehouse depending on the requirements of the customer gives a special design to each of the plants.

The length of this type of high-performance belts, as well as the guide on which the robot moves, are factors that differentiate each of the plants, being elements that delay the delivery of this type of warehouses. In addition, the belts imply frequent maintenance work.

Document DE 19724378 A1 discloses a shelf with an unloading device specially designed for small scale products such as medicines for pharmacies. The invention incorporates a discharge appliance formed by a plunger which lifts the products out of the sloping shaft and lets them slide into a collector-container. The plunger has a forward thrust arrangement. A carriage travels along a horizontal runner rail with or without a vertical runner rail with toothed belt drive. Reinforcement struts are between the carriage and vertical rail.

Document EP2113473 A1 discloses an automatic plant for storing and dispersing products according to the preamble of claim 1.

### DESCRIPTION OF THE INVENTION

With the purpose of reaching the objectives and avoiding the inconveniences mentioned in the previous sections, the invention proposes an automatic plant for storing and dispensing products that comprises a characteristic fully modular automatic storage system that allows reducing the costs of manufacturing, assembling and starting the plant, in addition to a strong control system that is accessible online, which may be accessed for maintenance tasks and in the case of system failures.

As referred in the previous sections, products are stored in modular shelves of characteristic shelving units that are also modular, configuring an elongated structure in the longitudinal direction.

Shelves are arranged at different heights, so that through both longitudinal sides of the elongated structure of shelving units and separated from it, a characteristic front loading subset (robot), which deposits the packaged products in the highest part of the shelves from a side of the elongated structure, and a characteristic rear unloading subset (robot), which downloads the packaged products from the lowest part of the shelves in correspondence with the other side of the elongated structure are arranged, all this carried out automatically.

The loading and unloading subsets move along characteristic modular horizontal guides that adapt to the length required with respect to the length of the elongated structure of shelving units.

Both loading and unloading subsets have a horizontal translation movement parallel to this elongated structure of shelving units and a vertical movement to access the different levels of the shelves where the products are stored.

The modular horizontal guides are supported at the top of vertical legs affixed at the bottom in correspondence with a modular base that is also formed by different base plates and stiffening profiles.

The modular horizontal guides are characterized in that they comprise a modular upper rail that incorporates permanent magnets and an encoder strip, and an electrified lower rail that constitutes a channel for supplying electricity to a coil incorporated in a revolving movable head coupled to the modular upper rail that moves along thereof with precision and in a controlled manner.

The encoder may be optical and/or magnetic depending on the type of linear motor and the precision it needs to operate with.

This electrified rail is to supply all the systems of the plant, the transmission system in the "x" axis (horizontal direction) through a driver and a linear motor, and in the "y" axis (vertical direction) through a driver and a rotary servo-motor, and also the signal control and transmission system, both internally and with the external plants.

In addition, said revolving movable head incorporates skids and also an encoder reader to determine, in combination with the encoder strip, the exact and precise position of the revolving movable head at any time.

The rest of each of the loading and unloading subsets are assembled on said revolving movable head, incorporating a vertical profile connected to said revolving movable head, while on said vertical profile is coupled a mobile support that can move along said vertical profile. The movable head also incorporates an electronic control panel.

Said mobile support incorporates a cradle to hold the respective container containing the corresponding packaged product to deposit it with precision in the modular shelves through the side of the elongated structure of shelving units by means of the loading subset, or to collect it from said inclined modular shelves through the opposite side by means of the other matching unloading subset.

The mobility upwards and downwards from the mobile supports is carried out by means of a notched belt coupled to end tooth wheels, one of which is connected to an electric motor element arranged in the upper end of the respective vertical profile.

The modular upper rail of the horizontal guide system of the loading and unloading subsets is affixed to the vertical legs by means of revolving plates, while the lower rail is affixed to the legs by means of angular plates.

With the described embodiment, the operation of the plant is basically the following.

First, once the new product (contained in the respective box) is accepted, or the product has been extracted from the warehouse but was not acquired by the customer at the end, the product is once again introduced into the warehouse in the product loading area in a semiautomatic manner. The pharmacist will then deposit the packaged product on a belt after passing the product by a barcode reader. The pharmacist will have a drawer to place the packaged product so that he or she does not place it in a wrong place.

This belt will move the packaged product through a laser volume measuring system so that a certain packaged product and the dimensions of the container containing the product are allocated to a barcode. The system will assess whether that product is already stored at the shelves of the shelving units, and if so, it will assess whether the dimensions are the same than those recorded, ordering the robot to place that packaged product in the position where the rest of the stored product is located. If that reference does not exist in the warehouse, the system will assign a new location to it.

Next, the belt transfers the packaged product to the collecting position of the product for the robot (loading subset). By means of a pushing system, the cradle of the robot collects the product from the belt.

Once having the location where the product is to be deposited, the robot carries out the necessary displacement and pushes the packaged product in the channel of the shelving unit where it must be located.

The storage of the packaged product in the shelving unit is done by gravity, in such a way that the container with the product slides along the shelf when it is inclined until it meets the final stop of the channel or the container that was loaded previously.

The unloading process of the packaged product begins with the instruction given by the pharmacist from his or her working position assisting customers. From this point, the unloading robot is positioned in the channel where the indicated product is located and, from the elevation cradle thereof, a driver comes out, sufficiently elevating the product so that, due to gravity, the product overcomes the final stop of the channel and slides over the cradle. The cradle ensures that the product has been unloaded by means of presence photocells.

After carrying out this verification, the robot is positioned at the output point of the material once again and, by opening a gate and once again due to gravity, it deposits the packaged product at the unloading point or on a conveyor belt that takes the product to the reception point of the order placed by the pharmacist.

To achieve the foregoing, the new translation drive system of the robots (loading and unloading subsets) that allow higher velocities as well as greater modularity has been developed.

To achieve the foregoing, linear servo-motors are used, which are basically defined by the combination of each upper rail with its permanent magnets and the movable head that incorporates the corresponding coiling.

These servo-motors allow a precise positioning and a much higher velocity than current monitoring mechanisms. In addition, having mechanical transmission elements is avoided, avoiding therefore the wearing out of spindles, belts, etc., which mean a reduction in maintenance costs.

For a four-meter long system it has been calculated that, in this type of motors, and with the acceleration ramps allowed, the time to carry out said displacement is six seconds.

For the longitudinal positioning, it has been decided that optical or magnetic encoders will be used to allow the modularity of the system.

In terms of the modularity of the translation system, a study of the lengths to be mechanized will be carried out when designing the same, both the fastening system of the linear motor and the system of the sliding linear guides of said motor (revolving movable head).

The necessary extruded aluminum profile is designed in order to withstand the translation guides, as well as the fixed part of the linear motor.

Lastly, the replacement of the traditional electricity supply system by means of cable chain with a closed profile outlet channel (lower rail) that allows the velocities and accelerations to be developed by the linear motor, will be studied.

All of these elements will be supplied in predetermined standard lengths, so that there are standard modules to carry out the entire path, plus a final section whose length depends on the length of the final plant. In the case of a change of the length of the plant during the manufacturing process, only the final section varies.

The modules of the shelving units are manufactured in a modular manner, as above mentioned, in the same length than the sections of the translation system, adjusting the total length of the plant to the intermediate shelves.

The inclined shelves have a surface finish that allows the correct sliding of the medicines (packaged products) due to gravity, providing them enough inclination to optimize the space between shelves as well as the fall velocity of containers containing the products. If one product has a significantly lower weight, the shelf may be provided with additional inclination to favor the fall.

The fastening system of the shelf to the shelving unit will be carried out by means of quick bindings without the need of tools, so that the embodiment of the shelves may be changed quickly.

The guide system is also developed, making up the channels through which the packaged products slide, in a thermoplastic material that favors sliding. These guides may be disassembled quickly in order to change the configuration of the shelf in a quick and simple manner.

On the other hand, a robot loading and unloading system (loading and unloading subsets) is intended to be developed, which will use the same fastening base of the column, so they only differ in the loading/unloading device itself, reducing the number of references for the maintenance of the plant.

The use of pneumatics will be avoided, thus eliminating the compressed air plant that must be installed for some commercial solutions, which is uncommon in pharmacies. All mechanisms will be activated by means of electric motors and controlled by means of photocells that allow guaranteeing the positioning of all motors as well as the load at all times.

In terms of the development of the control/communications system, the governance of the system will be carried out by means of PLC-PC, wherein the relational database and the master application files will reside. Wireless technology will be used for the communication of the PC with the PLCs integrated to the machine.

In terms of software-level developments, the project includes the development of the application for the governance of the system, which will foreseeably be divided into three large operating blocks: management, maintenance and control.

The first of them is in charge of controlling the product entry and exit operations, with their corresponding admissions and discharges in the system, as well as the extraction of expired products; it also encompasses the operations providing statistical data and information about the system and the stored products, as well as commercially valuable information, to assist in the decision-making process.

The purpose of the maintenance operation is the optimization of the warehouse by means of recalculations, empty space management, physical redefinition of the shelves, etc.

Lastly, the control block is in charge of the physical movements of the system, the communication with the external parts by means of barcode readers, by means of signals of existence or non-existence of the medicine, by means of the calibration of the medicine for one or another cell allocation, etc.

The development tasks related to the database are focused so that said database allows the registration and control of information such as:
- The characteristics of the stored products.
- The positions and dimensions of available empty spaces.
- The position occupied by the different products at the warehouse.
- The registration of the history of operations carried out.

The development activities also include programming the control system of the prototype. Special attention is given at this point within the development of user interfaces so that they allow, in a flexible and intuitive manner, understanding and managing the information related to the products stored and dispensed by means of this system (name of the item, measurements, expiration date, registry reference number, etc.).

Next, in order to aid a better comprehension of this specification and forming an integral part thereof, figures representing the object of the invention in an illustrative rather than limitative manner have been attached.

### BRIEF DESCRIPTION OF THE DRAWINGS

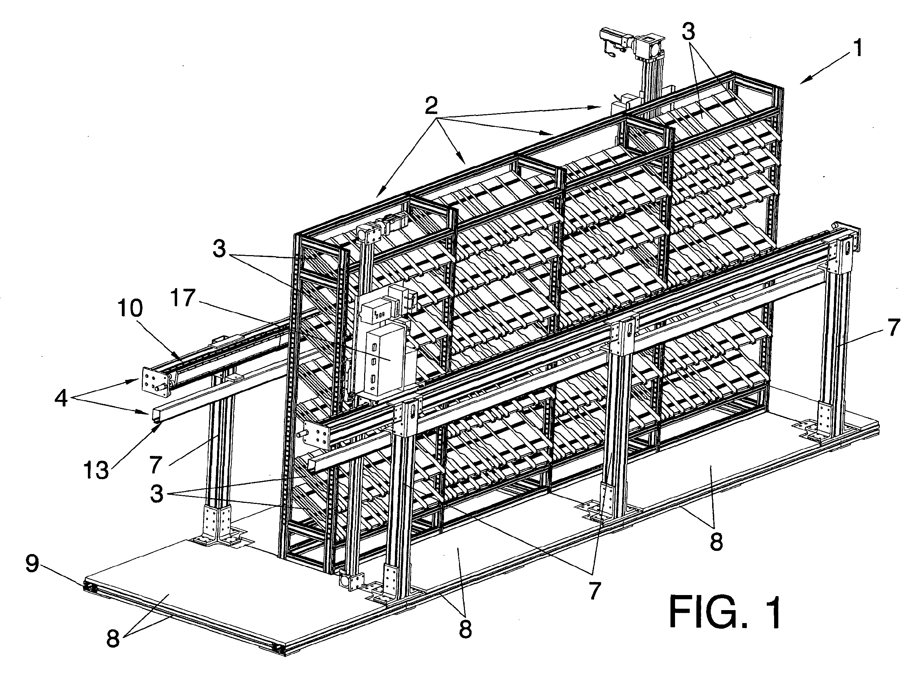

**Figure 1** shows a perspective view of the automatic plant for storing and dispensing packaged products, object of the invention. It basically comprises an elongated structure of modular shelving units that support a set of shelves where the packaged products are stored. In addition, it incorporates a characteristic modular horizontal guide system, wherein a front loading subset and a rear unloading subset are coupled.

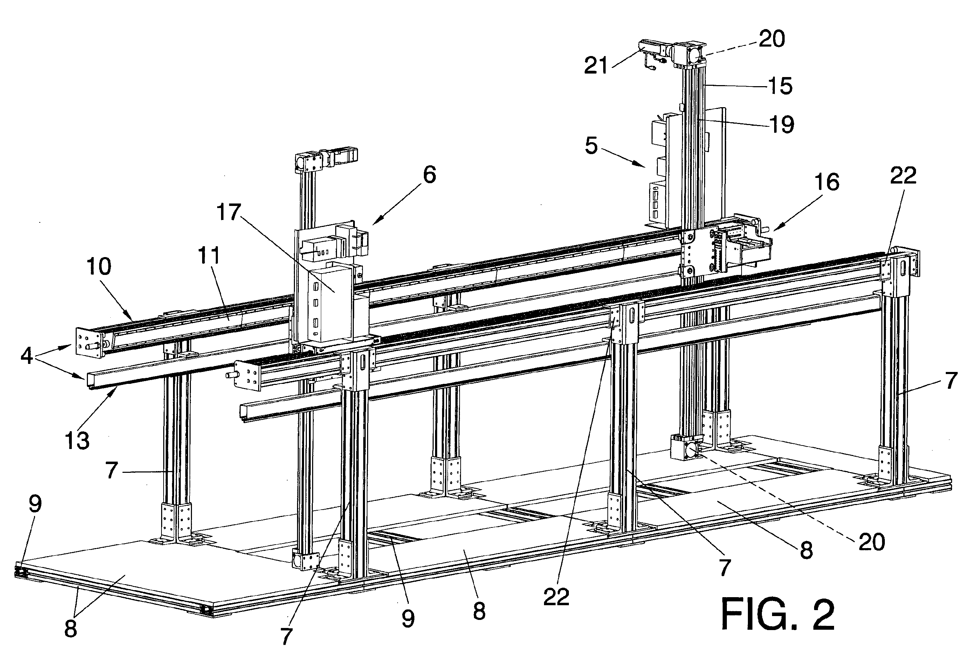

**Figure 2** shows a view similar to the foregoing, wherein the elongated structure of shelving units is not included.

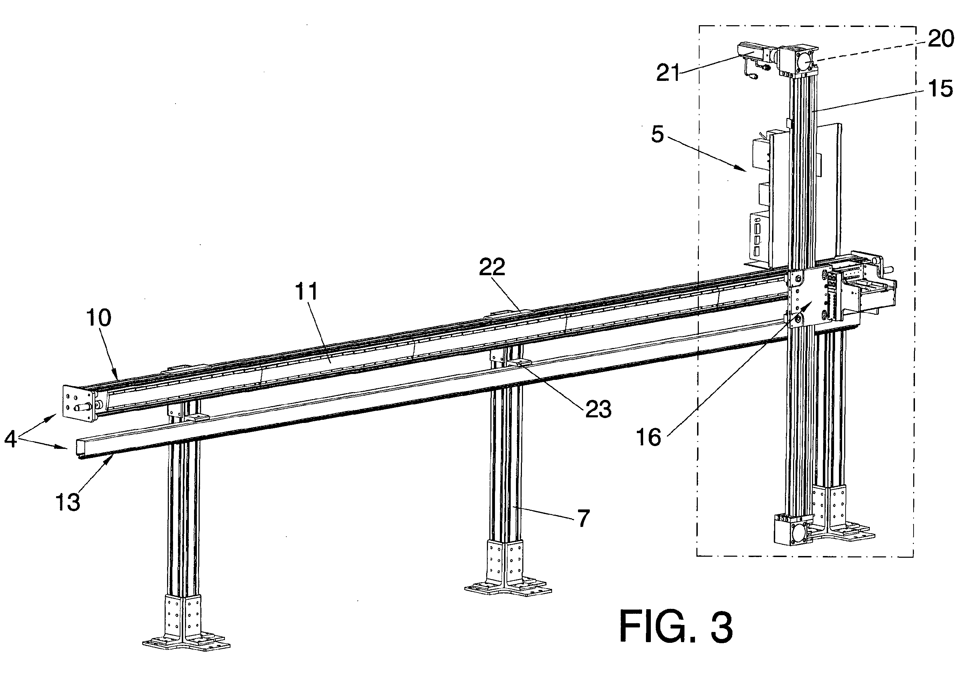

**Figure 3** shows a perspective view of the modular horizontal guide system.

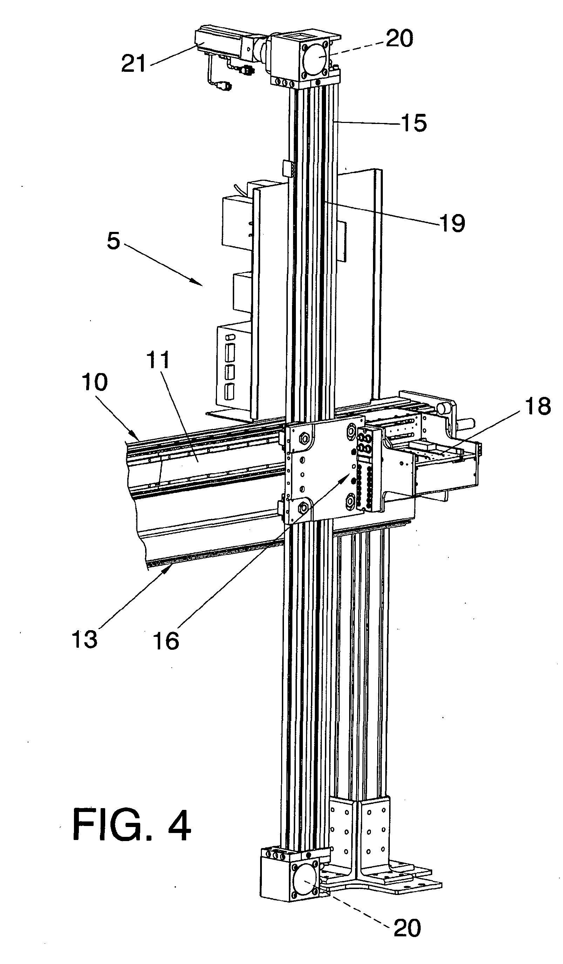

**Figure 4** shows a detail of the modular horizontal guide system highlighting a movable head supporting an electronic control panel and a vertical profile through which a mobile support provided with a cradle receiving the boxes with the respective product passes.

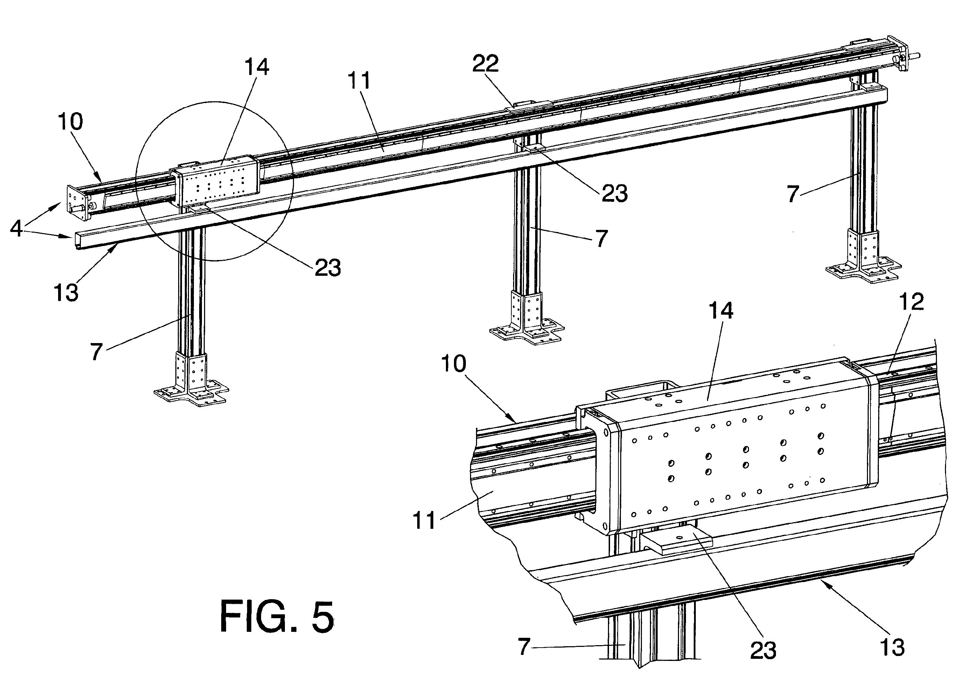

**Figure 5** shows a detail view of the coupling of the movable head with respect to the modular horizontal guide system.

### DESCRIPTION OF THE FORM OF THE PREFERRED EMBODIMENT

Taking into account the numbering adopted in the figures, the automatic plant for storing and dispensing products is determined from an elongated structure 1 that supports modular shelving units 2 with shelves 3, arranged at different heights and overlapping below each other and beside each other as well.

In correspondence with both longitudinal sides of the elongated structure 1 and separated thereof, there are characteristic modular horizontal guides 4 that are coupled and guide by moving a front loading subset 5 in correspondence with one of the sides of said elongated structure 1 that deposits the products in the most elevated part of the shelves 3, and a rear loading subset 6, located at the other matching side of the elongated structure 1, said rear unloading subset 6 being intended to collect the products from the lowest part of the shelves 3 when they are inclined.

The loading 5 and unloading 6 subsets have a horizontal translation movement parallel to this elongated structure 1 of shelving units and a vertical movement to access the different levels of the shelves 3, where the products are stored.

The modular horizontal guides 4 are supported at the top of vertical legs 7 affixed at the bottom in correspondence with a modular base that is also formed by different base plates 8 and stiffening profiles 9, said vertical legs 7 being joined thereof.

The modular horizontal guides 4 comprise a modular upper rail 10 that incorporates permanent magnets 11 and an encoder strip 12.

In addition, the horizontal modular guides 4 incorporate a lower rail 13 that constitutes a channel for supplying electricity to a coil incorporated in a revolving movable head 14 coupled to the modular upper rail 10 that moves along said modular upper rail 10 with precision and in a controlled manner. The electrified lower rail 13 supplies all the elements of the plant requiring electricity.

The revolving movable head 14 also incorporates skids and an encoder reader to determine, in combination with the encoder strip 12, the exact and precise position of the revolving movable head 14 at any time. It incorporates an electronic control panel 17.

On said revolving movable head 14 each of the loading 5 and unloading 6 subsets is affixed, incorporating a vertical profile 15 for said purpose, which is connected to said revolving movable head 14, while a mobile support 16 is coupled to said vertical profile 15, which moves along said vertical profile 15.

The mobile support 16 incorporates a cradle 18 to house the respective container containing the corresponding product to deposit it with precision in the modular shelves 3 through a side of the elongated structure of shelving units by means of the loading subset 5, or to collect it from said shelves 3 through the opposite side through another matching unloading subset 6.

The mobility upwards and downwards from the mobile supports 16 is carried out by means of a notched belt 19 coupled to end tooth wheels 20, one of which is connected to an electrical motor 21 arranged at the upper end of the vertical profile 15.

The modular upper rail 10 of the horizontal guide system of the loading 5 and unloading 6 subsets is affixed to the vertical legs 7 by means of revolving plates 22, while the lower rail is affixed to the legs by means of angular plates 23.

Therefore, the use of linear motors combined with electrified guides and wireless systems are to maintain other systems (sets 5 and 6) with the purpose of transporting and positioning materials. By definition, these linear motors only have one support point, wherein the movement is generated and applied. The result of the foregoing is that said linear motors do not need to have a fixed point of reference (where it is generated) and a referenced point (where it is applied and from where it is supplied).

## Claims

1. Automatic plant for storing and dispensing products, which includes an elongated structure (1) that supports shelving units (2) with a set of shelves (3) for storing packaged products, and which also includes, at both longitudinal sides of the elongated structure (1) and separated thereof, a pair of longitudinal horizontal guide systems, where a front loading subset (robot) (5) is coupled and displaced to deposit the product in the shelves (3), and a rear unloading subset (robot) (6) to collect the product from said shelves (3), is **characterized in that** the guide systems comprise modular horizontal guides (4), each of which comprises a modular upper rail (10) incorporating permanent magnets (11) and an encoder strip (12), a revolving movable head (14) that can move along the modular upper rail (10) being coupled to said modular upper rail (10), said head including at least one coil, an electronic control panel (17) and an encoder reader associated with the encoder strip (12), said revolving movable head (14) serving as the support means for the relevant subset, each longitudinal guide system also comprising a lower rail (13) that constitutes a channel for supplying electricity to the coil of the revolving movable head (14) and other parts of the plant that require electricity and said loading (5) and unloading (6) subsets also incorporate a mobile support (16) that can move along a vertical profile (15) affixed to the revolving movable head (14), said mobile support (16) incorporating a cradle (18) to collect and deposit the packaged product when it is loaded and unloaded with respect to the shelves (3).

2. Automatic plant for storing and dispensing products according to claim 1, **characterized in that** the movement of the mobile support (16) along the vertical profile (15) is carried out by means of a notched belt (19) coupled to end tooth wheels (20), one of which is connected to an electrical motor element (21) arranged in the upper end of the vertical profile (15).

3. Automatic plant for storing and dispensing products according to any one of the previous claims, **characterized in that** the modularity of the modular upper rail (10) is supplemented by a modular structure of shelving units (2) and shelves (3), said modularity also being incorporated in base plates (8) making up a base platform of the plant.

4. Automatic plant for storing and dispensing products according to claim 1, **characterized in that** the encoder strip (12) is magnetic.

5. Automatic plant for storing and dispensing products according to claim 1, **characterized in that** the encoder strip (12) is optical.

6. Automatic plant for storing and dispensing products according to claim 3, **characterized in that** the modular upper rails (10) and lower rails (13) are affixed on the top of vertical legs (7) that begin from the base platform of the plant.

7. Automatic plant for storing and dispensing products according to claims 2 and 3, **characterized in that** the base platform is supplemented with stiff profiles (9).

8. Automatic plant for storing and dispensing products according to claim 7, **characterized in that** the legs are affixed at the bottom to the stiffening profiles (9).

9. Automatic plant for storing and dispensing products according to claim 6, **characterized in that** the modular upper rails (10) are affixed to the vertical legs (7) by means of revolving plates (22).

10. Automatic plant for storing and dispensing products according to claim 6, **characterized in that** the lower rail (13) is affixed to the vertical legs (7) by means of angular plates (23).

## Patentansprüche

1. Automatische Anlage zum Aufbewahren und Ausgeben von Erzeugnissen, die eine längliche Struktur (1) enthält, die Facheinheiten (2) mit einer Gruppe von Fächern (3) zum Aufbewahren verpackter Erzeugnisse trägt, und die des Weiteren an beiden Längsseiten der länglichen Struktur (1) und davon getrennt ein Paar Längs-Horizontalführungssysteme, mit denen eine vordere Einlege-Teilgruppe (Roboter) (5) gekoppelt ist und verschoben wird, um das Erzeugnis in den Fächern (3) abzulegen, sowie eine hintere Entnahme-Teilgruppe (Roboter) (6) zum Aufnehmen des Erzeugnisses aus den Fächern (3) enthält, **dadurch gekennzeichnet, dass** die Führungssysteme modulare horizontale Führungen (4), die jeweils eine modulare obere Schiene (10), in die Permanentmagnete (11) und eine Codier-Leiste (12) integriert sind, einen beweglichen Drehkopf (14) umfassen, der sich an der modularen oberen Schiene (10) entlang bewegen kann und mit der modularen oberen Schiene (10) gekoppelt ist, wobei der Kopf wenigstens eine Spule enthält, eine elektronische Steuertafel (17) sowie einen Codier-Leser, der mit der Codier-Leiste (12) verbunden ist, wobei der bewegliche Drehkopf (14) als die Trageeinrichtung für die entsprechende Teilgruppe dient, jedes Längs-Führungssystem des Weiteren eine untere Schiene (13), die einen Kanal zum Zuführen von Strom zu der Spule des beweglichen Drehkopfes (14) und anderen Teilen der Anlage bildet, die Strom benötigen und die Einlege-Teilgruppe (5) sowie die Entnahme-Teilgruppe (6) des Weiteren einen beweglichen Träger (16) enthalten, der sich an einem vertikalen Profil (16) entlang bewegen kann, das an dem beweglichen Drehkopf (14) befestigt ist, und in den beweglichen Träger (16) eine Aufnahme (18) integriert ist, in der das verpackte Erzeugnis aufgenommen und abgelegt wird, wenn es in die Fächer (3) eingelegt bzw. aus ihnen entnommen wird.

2. Automatische Anlage zum Aufbewahren und Ausgeben von Erzeugnissen nach Anspruch 1, **dadurch gekennzeichnet, dass** die Bewegung des beweglichen Trägers (16) an dem vertikalen Profil (15) mittels eines Zahnriemens (19) ausgeführt wird, der mit Stirnzahnrädern (20) gekoppelt ist, von denen eines mit einem Elektromotor-Element (21) verbunden ist, das am oberen Ende des vertikalen Profils (15) angeordnet ist.

3. Automatische Anlage zum Aufbewahren und Ausgeben von Erzeugnissen nach einem der vorangehenden Ansprüche, **dadurch gekennzeichnet, dass** die Modularität der modularen oberen Schiene (10) durch eine modulare Struktur aus Facheinheiten (2) und Fächern (3) ergänzt wird und die Modularität auch in Grundplatten (8) integriert ist, die eine Grundplattform der Anlage bilden.

4. Automatische Anlage zum Aufbewahren und Ausgeben von Erzeugnissen nach Anspruch 1, **dadurch gekennzeichnet, dass** die Codier-Leiste (12) magnetisch ist.

5. Automatische Anlage zum Aufbewahren und Ausgeben von Erzeugnissen nach Anspruch 1, **dadurch gekennzeichnet, dass** die Codier-Leiste (12) optisch ist.

6. Automatische Anlage zum Aufbewahren und Ausgeben von Erzeugnissen nach Anspruch 3, **dadurch gekennzeichnet, dass** die modularen oberen Schienen (12) und unteren Schienen (13) an dem oberen Ende vertikaler Stützen (7) befestigt sind, die an der Grundplattform der Anlage beginnen.

7. Automatische Anlage zum Aufbewahren und Ausgeben von Erzeugnissen nach den Ansprüchen 2 und 3, **dadurch gekennzeichnet, dass** die Grundplattform mit steifen Profilen (9) versehen ist.

8. Automatische Anlage zum Aufbewahren und Ausgeben von Erzeugnissen nach Anspruch 7, **dadurch gekennzeichnet, dass** die Stützen am unteren Ende an den Versteifungsprofilen (9) befestigt sind.

9. Automatische Anlage zum Aufbewahren und Ausgeben von Erzeugnissen nach Anspruch 6, **dadurch gekennzeichnet, dass** die modularen oberen Schienen (10) mittels Drehplatten (22) an den vertikalen Stützen (7) befestigt sind.

10. Automatische Anlage zum Aufbewahren und Ausgeben von Erzeugnissen nach Anspruch 6, **dadurch gekennzeichnet, dass** die untere Schiene (13) mittels Winkelplatten (23) an den vertikalen Stützen (7) befestigt ist.

## Revendications

1. Installation automatique de stockage et de distribution de produits comprenant une structure allongée (1) qui soutient des unités de rayonnage (2) avec une série de rayonnages (3) pour stocker des produits emballés et qui comprend également, des deux côtés longitudinaux de la structure allongée (1) et séparée de celle-ci, une paire de systèmes de guidage horizontaux longitudinaux dans lesquels un sous-ensemble de chargement frontal (robot) (5) est couplé et déplacé pour déposer le produit dans les rayonnages (3) et un sous-ensemble de déchargement arrière (robot) (6) pour collecter le produit desdits rayonnages (3), **caractérisé en ce que** les systèmes de guidage comprennent des glissières horizontales modulaires (4) dont chacune comprend un rail supérieur modulaire (10) intégrant des aimants permanents (11) et une bande de codage (12), une tête mobile rotative (14) qui peut se déplacer le long du rail supérieur modulaire (10) en étant couplée audit rail supérieur modulaire (10), ladite tête comprenant au moins une bobine, un panneau de commande électronique (17) et un lecteur de codage associé à la bande de codage (12), ladite tête mobile rotative (14) servant de moyens de support pour le sous-ensemble correspondant, chaque système de guidage longitudinal comprenant également un rail inférieur (13) qui constitue un canal pour amener l'électricité à la bobine de la tête mobile rotative (14) et d'autres parties de l'installation qui fonctionnent à l'électricité et lesdits sous-ensembles de chargement (5) et déchargement (6) comprennent également un support mobile (16) qui peut se déplacer le long d'un profil vertical (15) fixé à la tête mobile rotative (14), ledit support mobile (16) comprenant un berceau (18) pour enlever et déposer le produit emballé lorsqu'il est chargé et déchargé par rapport aux rayonnages (3).

2. Installation automatique de stockage et de distribution de produits selon la revendication 1, **caractérisée en ce que** le mouvement du support mobile (16) le long du profil vertical (15) est effectué au moyen d'une courroie crantée (19) raccordée à des roues dentées d'extrémité (20) dont une est raccordée à un élément à moteur électrique (21) disposé dans l'extrémité supérieure du profil vertical (15).

3. Installation automatique de stockage et de distribution de produits selon l'une des revendications précédentes, **caractérisée en ce que** la modularité du rail supérieur modulaire (10) est complétée par une structure modulaire d'unités de rayonnage (2) et des rayonnages (3), ladite modularité étant également intégrée dans des plaques de base (8) constituant une plate-forme de base de l'installation.

4. Installation automatique de stockage et de distribution de produits selon la revendication 1, **caractérisée en ce que** la bande de codage (12) est magnétique.

5. Installation automatique de stockage et de distribution de produits selon la revendication 1, **caractérisée en ce que** la bande de codage (12) est optique.

6. Installation automatique de stockage et de distribution de produits selon la revendication 3, **caractérisée en ce que** les rails supérieurs modulaires (10) et rails inférieurs modulaires (13) sont fixés au-dessus de montants verticaux (7) qui partent de la plate-forme de base de l'installation.

7. Installation automatique de stockage et de distribution de produits selon l'une des revendications 2 et 3, **caractérisée en ce que** la plate-forme de base est complétée par des profils raidisseurs (9).

8. Installation automatique de stockage et de distribution de produits selon la revendication 7, **caractérisée en ce que** les montants sont fixés dans le bas aux profils raidisseurs (9).

9. Installation automatique de stockage et de distribution de produits selon la revendication 6, **caractérisée en ce que** les rails supérieurs modulaires (10) sont fixés aux montants verticaux (7) au moyen de plaques rotatives (22).

10. Installation automatique de stockage et de distribution de produits selon la revendication 6, **caractérisée en ce que** le rail inférieur (13) est fixé aux montants verticaux (7) au moyen de plaques angulaires (23).
